(19) Europäisches Patentamt / European Patent Office / Office européen des brevets

(11) EP 4 021 674 B1

(12) **EUROPEAN PATENT SPECIFICATION**

(45) Date of publication and mention of the grant of the patent:
**30.04.2025 Bulletin 2025/18**

(21) Application number: **20768831.8**

(22) Date of filing: **28.08.2020**

(51) International Patent Classification (IPC):
**B23K 9/10** (2006.01)

(52) Cooperative Patent Classification (CPC):
**B23K 9/1093; B23K 9/0953; B23K 9/1062; B23K 9/16**

(86) International application number:
**PCT/US2020/048480**

(87) International publication number:
**WO 2021/041864 (04.03.2021 Gazette 2021/09)**

(54) **WELDING POWER SUPPLY WITH A WIRE PREHEATING SYSTEM**

SCHWEISSSTROMQUELLE MIT EINEM DRAHTVORWÄRMSYSTEM

ALIMENTATION ÉLECTRIQUE DE SOUDAGE AVEC UN SYSTÈME DE PRÉCHAUFFAGE DE FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2019 US 201962894109 P**
**27.08.2020 US 202017004691**

(43) Date of publication of application:
**06.07.2022 Bulletin 2022/27**

(73) Proprietor: **Illinois Tool Works, Inc.**
**Glenview, Illinois 60025 (US)**

(72) Inventors:
- **MASSEY, Steven B.**
  **Glenview, Illinois 60025 (US)**
- **HUTCHISON, Richard Martin**
  **Glenview, Illinois 60025 (US)**
- **UECKER, James Lee**
  **Glenview, Illinois 60025 (US)**

(74) Representative: **HGF**
**HGF Limited**
**1 City Walk**
**Leeds LS11 9DX (GB)**

(56) References cited:
EP-A2- 0 194 045    EP-A2- 0 316 936
US-A- 4 580 026    US-A1- 2018 099 346

## Description

This present invention relates generally to welding and, more particularly, to a welding power supply to convert welding-type power to welding-type power and resistive preheating power.

Welding is a process that has increasingly become ubiquitous in all industries. Welding is, at its core, simply a way of bonding two pieces of metal. A wide range of welding systems and welding control regimes have been implemented for various purposes. In continuous welding operations, metal inert gas (MIG) welding and submerged arc welding (SAW) techniques allow for formation of a continuing weld bead by feeding welding electrode wire shielded by inert gas from a welding torch and/or by flux. Such wire feeding systems are available for other welding systems, such as tungsten inert gas (TIG) welding. Electrical power is applied to the welding wire and a circuit is completed through the workpiece to sustain a welding arc that melts the electrode wire and the workpiece to form the desired weld.

Prior patent document EP 0316936 A2 (describing the preamble of claim 1) discloses an example of an AC TIG welding apparatus using a hot wire. In the apparatus, an unconsumable electrode is arranged in opposedly spaced relationship with a base metal to be welded. An AC arc welding power supply is connected between the base metal and the unconsumable electrode. A filler wire is fed toward an arc-generated part between the base metal and the unconsumable electrode. The apparatus comprises a wire-heating power supply for producing a pulsed current. The wire heating power supply heats the filler wire by supplying thereto a pulsed current in accordance with a synchronous signal from the AC arc welding power supply or a detection signal of an arc current or an arc voltage of the AC arc power supply.

## SUMMARY

According to the present invention, a welding power supply is defined in claim 1.

Further preferred embodiments of the present invention are defined in the dependent claims.

Methods and apparatus to provide welding-type power and preheating power are disclosed, substantially as illustrated by and described in connection with at least one of the figures, as set forth more completely in the appended claims.

## BRIEF DESCRIPTION OF THE DRAWINGS

Figure 1A illustrates an example welding system including a welding power supply configured to convert input power to welding power and preheating power, in accordance with aspects of this disclosure.

Figure 1B illustrates another example welding system including a welding power supply configured to convert input power to welding power and a preheating power supply configured to convert input power to preheating power, in accordance with aspects of this disclosure.

Figure 2 is a block diagram of an example implementation of the power supplies of Figure 1B.

Figure 3 illustrates an example user interface that may be used to input electrode wire properties for determining a target temperature.

Figure 4 is a table representative of an example database to store target temperatures and/or resistivities associated with wire types.

Figure 5 is a flowchart representative of example machine readable instructions which may be executed by the example power supplies of Figures 1A, 1B, and/or 2 to output welding power and preheating power.

Figure 6 is a flowchart representative of example machine readable instructions which may be executed by the example power supplies of Figures 1A, 1B, and/or 2 to determine material properties of an electrode wire to be preheated.

Figure 7 is a flowchart representative of example machine readable instructions which may be executed by the example power supplies of Figures 1A, 1B, and/or 2 to determine preheat process parameter(s) to heat the electrode wire to a target temperature.

Figure 8 is a flowchart representative of example machine readable instructions which may be executed by the example power supplies of Figures 1A, 1B, and/or 2 to control power conversion circuitry to output wire preheat power.

The figures are not necessarily to scale. Where appropriate, similar or identical reference numbers are used to refer to similar or identical components.

## DETAILED DESCRIPTION

For the purpose of promoting an understanding of the principles of the present invention, reference will be now made to the examples illustrated in the drawings and specific language will be used to describe the same.

For an electrode wire of given material properties (e.g., resistivity, density, specific heat capacity, etc.), a relationship can be defined between final preheat temperature and heating energy input. This relationship can be determined using the target wire temperature, process parameters, and material properties, and/or can be determined empirically by measuring the wire temperature through contact methods and/or reliable non-contact methods. An additional relationship exists between the final preheat temperature preheat current, wire feed speed, and wire area squared. This relationship will compensate for changes in wire diameter, wire feed speed, and/or preheating distance, because the heating energy input is a function that includes mass to be heated, resistance of the segment of wire to be heated, and preheating time.

Disclosed example welding power supplies use a temperature model involving the relationships discussed above to preheat electrode wire to a target temperature, without measuring the temperature of the preheated wire. Because temperature measurements of preheated wire within a welding torch are difficult due to the construction and/or geometries of welding torches, as well as the proximity of the preheated wire to a welding arc, disclosed example systems and methods permit accurate and reliable preheating temperature control without changes to the welding torch. Additionally, disclosed examples can be easily adapted to many different types of preheating welding systems, including different torches and/or power supplies.

Disclosed example welding power supplies enable a welding process developer to accurately target a defined preheat temperature without having to determine the corresponding preheating process parameters, which can shorten development time of the welding process. Welding process developers can use disclosed systems and methods to more quickly understand the manipulation of balance between preheat and welding energy for applications such as welding hot-rolled material, reduce heat input, reduce diffusible hydrogen in the resulting weld with cored wires (e.g., flux-cored wire, metal-cored wire), and/or manipulate fume generation rates.

Disclosed example welding power supplies use the temperature model (e.g., including the relationships discussed above) to define the process parameters, such as wire feed speed, preheating distance, preheating current, and/or preheating voltage, for controlling of the preheating process during welding. Some examples integrate the temperature model into the preheating and/or welding control system(s) to control the preheat process to preheat to a target temperature that is defined by the system and/or by the user.

As utilized herein the terms "circuits" and "circuitry" refer to physical electronic components (i.e. hardware) and any software and/or firmware (code) that may configure the hardware, be executed by the hardware, and/or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

As used herein, a wire-fed welding-type system refers to a system capable of performing welding (e.g., gas metal arc welding (GMAW), gas tungsten arc welding (GTAW), submerged arc welding (SAW), etc.), brazing, cladding, hardfacing, and/or other processes, in which a filler metal is provided by a wire that is fed to a work location, such as an arc or weld puddle.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith. The terms "power source" and "power supply" are used interchangeably herein.

As used herein, preheating refers to heating the electrode wire prior to a welding arc and/or deposition in the travel path of the electrode wire.

Some disclosed examples describe electric currents being conducted "from" and/or "to" locations in circuits and/or power supplies. Similarly, some disclosed examples describe "providing" electric current via one or more paths, which may include one or more conductive or partially conductive elements. The terms "from," "to," and "providing," as used to describe conduction of electric current, do not necessitate the direction or polarity of the current. Instead, these electric currents may be conducted in either direction or have either polarity for a given circuit, even if an example current polarity or direction is provided or illustrated.

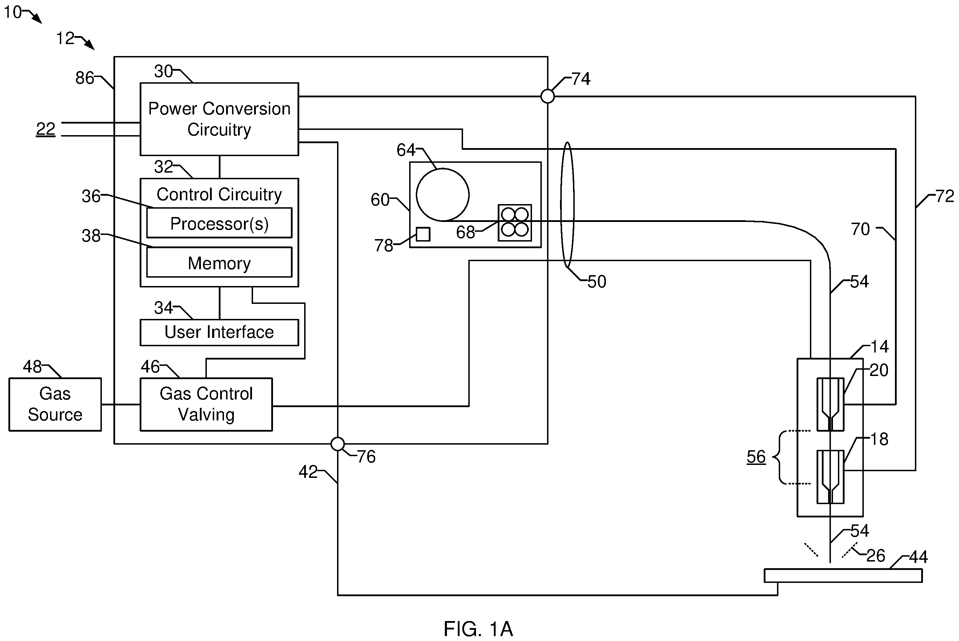

Figure 1A illustrates an example welding system 10, including a welding power supply 12 configured to convert input power to welding power and preheating power. The example welding system 10 of Figure 1A includes the welding power supply 12 and a preheating welding torch 14. The welding torch 14 may be a torch configured for any wire-fed welding process, such as gas metal arc welding (GMAW), flux cored arc welding (FCAW), self-shielded FCAW, and/or submerged arc welding (SAW), based on the desired welding application.

The welding power supply 12 converts the input power from a source of primary power 22 to one or both of output welding power and/or preheating power, which are output to the welding torch 14. In the example of Figure 1A, the welding power source also supplies the filler metal to a welding torch 14 configured for GMAW welding, FCAW welding, or SAW welding.

The welding power supply 12 is coupled to, or includes, the source of primary power 22, such as an electrical grid or engine-driven generator that supplies primary power, which may be single-phase or three-phase AC power. For example, the welding power supply 12 may be an engine-driven welding power source that includes the engine and generator that provides the primary power 22 within the welding power supply 12. The welding power supply 12 may process the primary power 22 to output welding-type power for output to the welding torch 14 via an torch cable 50.

Power conversion circuitry 30 converts the primary power (e.g., AC power) to welding-type power as either direct current (DC) or AC, and to preheating power. Example preheating power may include DC and/or AC electrical current that provides resistive, or Joule, heating when conducted through a portion of the electrode wire 54. Additional examples of preheating power disclosed herein may include high frequency AC current that provides inductive heating within the electrode wire 54, and/or power suitable for hotwire techniques, arc-based preheating in which an electrical arc is used to apply heat to the wire prior to the welding arc, laser-based preheating, radiant heating, convective heating, and/or any other forms of wire heating. The power conversion circuitry 30 may include circuit elements such as transformers, switches, boost converters, inverters, buck converters, half-bridge converters, full-bridge converters, forward converters, flyback converters, an internal bus, bus capacitor, voltage and current sensors, and/or any other topologies and/or circuitry to convert the input power to the welding power and the preheating power, and to output the welding power and the preheating power to the torch 14. Example implementations of the power conversion circuitry 30 are disclosed below in more detail.

The first and second portions of the input power may be divided by time (e.g., the first portion is used at a first time and the second portion is used at a second time) and/or as portions of the total delivered power at a given time. The power conversion circuitry 30 outputs the welding power to a weld circuit, and outputs the preheating power to a preheating circuit or other preheater. The weld circuit and the preheating circuit may be implemented using any combination of the welding torch 14, a weld accessory, and/or the power supply 12.

The power conversion circuitry 30 may include circuit elements such as boost converters. In some examples, the primary power 22 received by the power conversion circuitry 30 is an AC voltage between approximately 110V and 575V, between approximately 110V and 480V, or between approximately 110V and 240V. As used in reference to the input power, the term approximately may mean within 5 volts or within 10 percent of the desired voltage.

The power conversion circuitry 30 may be configured to convert the input power to any conventional and/or future welding-type output. The example power conversion circuitry 30 may implement one or more controlled voltage control loop(s), one or more controlled current control loop(s), one or more controlled power control loops, one or more controlled enthalpy control loops, and/or one or more controlled resistance control loops to control the voltage and/or current output to the welding circuit and/or to the preheating circuit. As described in more detail below, the power conversion circuitry 30 may be implemented using one or more converter circuits, such as multiple converter circuits in which each of the welding-type output and the preheating output is produced using separate ones of the converter circuits.

In some examples, the power conversion circuitry 30 is configured to convert the input power to a controlled waveform welding output, such as a pulsed welding process or a short circuit welding process (e.g., regulated metal deposition (RMD™)). For example, the RMD™ welding process utilizes a controlled waveform welding output having a current waveform that varies at specific points in time over a short circuit cycle.

The welding power supply 12 includes control circuitry 32 and an user interface 34. The control circuitry 32 controls the operations of the welding power supply 12 and may receive input from the user interface 34 through which an operator may choose a welding process (e.g., GMAW, FCAW, SAW) and input desired parameters of the input power (e.g., voltages, currents, particular pulsed or non-pulsed welding regimes, and so forth). The control circuitry 32 may be configured to receive and process a plurality of inputs regarding the performance and demands of the system 10.

The control circuitry 32 includes one or more controller(s) and/or processor(s) 36 that controls the operations of the power supply 12. The control circuitry 32 receives and processes multiple inputs associated with the performance and demands of the system. The processor(s) 36 may include one or more microprocessors, such as one or more "general-purpose" microprocessors, one or more special-purpose microprocessors and/or ASICS, one or more microcontrollers, and/or any other type of processing and/or logic device. For example, the control circuitry 32 may include one or more digital signal processors (DSPs). The control circuitry 32 may include circuitry such as relay circuitry, voltage and current sensing circuitry, power storage circuitry, and/or other circuitry, and is configured to sense the primary power 22 received by the power supply 12.

The example control circuitry 32 includes one or more memory device(s) 38. The memory device(s) 38 may include volatile and/or nonvolatile memory and/or storage devices, such as random access memory (RAM), read only memory (ROM), flash memory, hard drives, solid state storage, and/or any other suitable optical, magnetic, and/or solid-state storage mediums.

The memory device(s) 38 store data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth. The memory device 38 may store machine executable instructions (e.g., firmware or software) for execution by the processor(s) 36. Additionally or alternatively, one or more control schemes for various welding processes, along with associated settings and parameters, may be stored in the memory device(s) 38, along with machine executable instructions configured to provide a specific output (e.g., initiate wire feed, enable gas flow, capture welding current data, detect short circuit parameters, determine amount of spatter) during operation.

The example user interface 34 enables control or adjustment of parameters of the welding system 10. The user interface 34 is coupled to the control circuitry 32 for operator selection and adjustment of the welding process (e.g., pulsed, short-circuit, FCAW) through selection of the wire size, wire type, material, and gas parameters. The user interface 34 is coupled to the control circuitry 32 for control of the voltage, amperage, power, enthalpy, resistance, wire feed speed, and arc length for a welding application. The user interface 34 may receive inputs using any input device, such as via a keypad, keyboard, buttons, touch screen, voice activation system, wireless device, etc.

The user interface 34 may receive inputs specifying wire material (e.g., steel, aluminum), wire type (e.g., solid, cored), wire diameter, gas type, and/or any other parameters. Upon receiving the input, the control circuitry 32 determines the welding output for the welding application. For example, the control circuitry 32 may determine weld voltage, weld current, wire feed speed, inductance, weld pulse width, relative pulse amplitude, wave shape, preheating voltage, preheating current, preheating pulse, preheating resistance, preheating energy input, and/or any other welding and/or preheating parameters for a welding process based at least in part on the input received through the user interface 34.

In some examples, the welding power supply 12 may include polarity reversing circuitry. Polarity reversing circuitry reverses the polarity of the output welding-type power when directed by the control circuitry 32. For example, some welding processes, such as TIG welding, may enable a desired weld when the electrode has a negative polarity, known as DC electrode negative (DCEN). Other welding processes, such as stick or GMAW welding, may enable a desired weld when the electrode has a positive polarity, known as DC electrode positive (DCEP). When switching between a TIG welding process and a GMAW welding process, the polarity reversing circuitry may be configured to reverse the polarity from DCEN to DCEP.

Additionally or alternatively, the operator may simply connect the torch 14 to the power supply 12 without knowledge of the polarity, such as when the torch is located a substantial distance from the power supply 12. The control circuitry 32 may direct the polarity reversing circuitry to reverse the polarity in response to signals received through communications circuitry, and/or based on a selected or determined welding process.

In some examples, the power supply 12 includes communications circuitry. For example, communications circuitry may be configured to communicate with the welding torch 14, accessories, and/or other device(s) coupled to power cables and/or a communications port. The communications circuitry sends and receives command and/or feedback signals over welding power cables used to supply the welding-type power. Additionally or alternatively, the communications circuitry may communicate wirelessly with the welding torch 14 and/or other device(s).

For some welding processes (e.g., GMAW), a shielding gas is utilized during welding. In the example of Figure 1A, the welding power supply 12 includes one or more gas control valves 46 configured to control a gas flow from a gas source 48. The control circuitry 32 controls the gas control valves 46. The welding power supply 12 may be coupled to one or multiple gas sources 48 because, for example, some welding processes may utilize different shielding gases than others. In some examples, the welding power supply 12 is configured to supply the gas with the welding power and/or the preheating power to the torch 14 via a combined torch cable 50. In other examples, the gas control valves 46 and gas source 48 may be separate from the welding power supply 12. For example, the gas control valves 46 may be disposed connected to the combined torch cable 50 via a connector.

The example power supply 12 includes a wire feed assembly 60 that supplies electrode wire 54 to the welding torch 14 for the welding operation. The wire feed assembly 60 includes elements such as a wire spool 64 and a wire feed drive configured to power drive rolls 68. The wire feed assembly 60 feeds the electrode wire 54 to the welding torch 14 along the torch cable 50. The welding output may be supplied through the torch cable 50 coupled to the welding torch 14 and/or the work cable 42 coupled to the workpiece 44. As disclosed in more detail below, the preheating output may be supplied to the welding torch 14 (or another via a connection in the wire feed assembly 60), supplied to the welding torch 14 via one or more preheating power terminals, and/or supplied to a preheater within the wire feed assembly 60 or otherwise within a housing 86 of the welding power supply 12.

The example power supply 12 is coupled to a preheating GMAW torch 14 configured to supply the gas, electrode wire 54, and electrical power to the welding application. As discussed in more detail below, the welding power supply 12 is configured to receive input power, convert a first portion of the input power to welding power and output the welding power to a weld circuit, and to convert a second portion of the input power to preheating power and output the preheating power to a preheating circuit or other preheater.

The example torch 14 includes a first contact tip 18 and a second contact tip 20. The electrode wire 54 is fed from the wire feed assembly 60 to the torch 14 and through the contact tips 18, 20, to produce a welding arc 26 between the electrode wire 54 and the workpiece 44. The preheating circuit includes the first contact tip 18, the second contact tip 20, and a portion 56 of the electrode wire 54 that is located between the first contact tip 18 and a second contact tip 20. The example power supply 12 is further coupled to the work cable 42 that is coupled to the workpiece 44.

In operation, the electrode wire 54 passes through the second contact tip 20 and the first contact tip 18, between which the power conversion circuitry 30 outputs a preheating current to heat the electrode wire 54. Specifically, in the configuration shown in Figure 1A, the preheating current enters the electrode wire 54 via the second contact tip 20 and exits via the first contact tip 18. However, the preheating current may be conducted in the opposite direction, using AC, and/or a combination of AC and DC. At the first contact tip 18, a welding current may also enter (or exit) the electrode wire 54.

The welding current is output by the power conversion circuitry 30, which derives the preheating power and the welding power from the primary power 22. The welding current flows between the electrode wire 54 and the workpiece 44, which in turn generates the welding arc 26. When the electrode wire 54 makes contact with the workpiece 44, or when an arc exists between the electrode wire 54 and the workpiece 44, an electrical circuit is completed and the welding current flows through the electrode wire 54, across the arc 26, across the metal work piece(s) 44, and returns to the power conversion circuitry 30 via a work cable 42. The welding current causes the electrode wire 54 and the parent metal of the work piece(s) 44 to melt, thereby joining the work pieces as the melt solidifies. By preheating the electrode wire 54, the welding arc 26 may be generated with drastically reduced arc energy. Generally speaking, the preheating current is proportional to the distance between the contact tips 18, 20 and the electrode wire 54 size.

During operation, the power conversion circuitry 30 establishes a preheating circuit to conduct preheating current through a section 56 of the electrode wire 54. The preheating current flows from the power conversion circuitry 30 to the second contact tip 20 via a first conductor 70, through the section 56 of the electrode wire 54 to the first contact tip 18, and returns to the power conversion circuitry 30 via a second conductor 72 connecting the power conversion circuitry 30 to the first contact tip 18. Either, both, or neither of the conductors 70, 72 may be combined with other cables and/or conduits. For example, the conductor 70 and/or the conductor 72 may be part of the cable 50. In other examples, the conductor 72 is included within the cable 50, and the conductor 70 is routed separately to the torch 14. To this end, the power supply 12 may include between one and three terminals to which one or more cables can be physically connected to establish the preheating, welding, and work connections. For example, multiple connections can be implemented into a single terminal using appropriate insulation between different connections.

In the illustrated example of Figure 1A, the power supply 12 includes two terminals 74, 76 configured to output the welding power to the contact tip 20 and the work cable 42. The conductor 72 couples the terminal 74 to the torch 14, which provides the power from the conductor 72 to the contact tip 18. The work cable 42 couples the terminal 76 to the workpiece 44. The example terminals 74, 76 may have designated polarities, or may have reversible polarities.

Because the preheating current path is superimposed with the welding current path over the connection between the first contact tip 18 and the power conversion circuitry 30 (e.g., via conductor 72), the cable 50 may enable a more cost-effective single connection between the first contact tip 18 and the power conversion circuitry 30 (e.g., a single cable) than providing separate connections for the welding current to the first contact tip 18 and for the preheating current to the first contact tip 18.

The example power supply 12 includes a housing 86, within which the control circuitry 32, the power conversion circuitry 30, the wire feed assembly 60, the user interface 34, and/or the gas control valving 46 are enclosed. In examples in which the power conversion circuitry 30 includes multiple power conversion circuits (e.g., a preheating power conversion circuit and a welding power conversion circuit), all of the power conversion circuits are included within the housing 86.

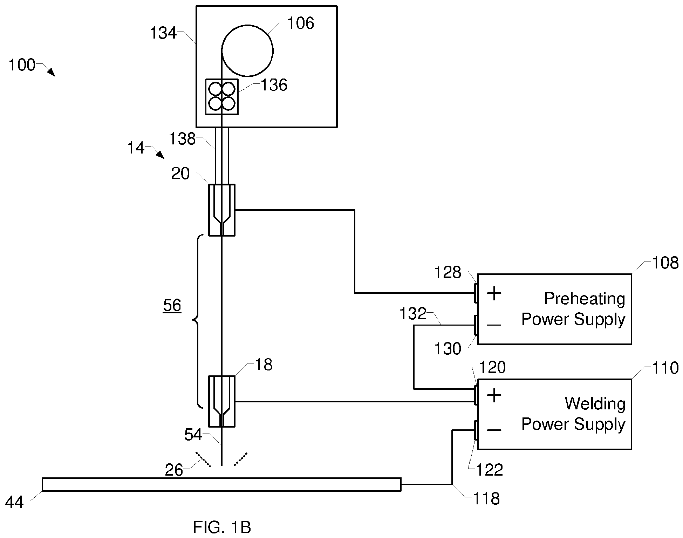

Figure 1B illustrates another example welding system 100 including a welding power supply 110 configured to convert input power to welding power and a preheating power supply 108 configured to convert input power to preheating power. The welding system 100 includes the example torch 14 having the contact tips 18, 20. The system 100 further includes the electrode wire 54 fed from a wire spool 106, a preheating power supply 108, and a welding power supply 110. The system 100 is illustrated in operation as producing the welding arc 26 between the electrode wire 54 and a workpiece 44.

In the example of Figure 1B, the system 100 includes separate power supplies 108, 110 to provide the welding power and the preheating power to the torch 14, instead of the single power supply 12 in the example of Figure 1A.

In operation, the electrode wire 54 passes from the wire spool 106 through the second contact tip 20 and the first contact tip 18, between which the preheating power supply 108 generates a preheating current to heat the electrode wire 54. Specifically, in the configuration shown in Figure 1B, the preheating current enters the electrode wire 54 via the second contact tip 20 and exits via the first contact tip 18. The example preheating power supply 108 may implement a controlled voltage control loop or a controlled current control loop to control the voltage and/or current output to the preheating circuit.

At the first contact tip 18, a welding current may also enter the electrode wire 114. The welding current is generated, or otherwise provided by, the welding power supply 110. The welding current flows between the electrode wire 54 and the workpiece 44, which in turn generates the welding arc 26. When the electrode wire 54 makes contact with a target metal workpiece 106, or when an arc exists between the electrode wire 54 and the workpiece 44, an electrical circuit is completed and the welding current flows through the electrode wire 54, across the arc 26, across the metal work piece(s) 44, and returns to the welding power supply 110. The welding current causes the electrode wire 54 and the parent metal of the work piece(s) 44 to melt, thereby joining the work pieces as the melt solidifies. By preheating the electrode wire 54, a welding arc 26 may be generated with drastically reduced arc energy. Generally speaking, the preheating current is proportional to the distance between the contact tips 18, 20 and the electrode wire 54 size.

The welding current is generated, or otherwise provided by, a welding power supply 110, while the preheating current is generated, or otherwise provided by, the preheating power supply 108. The preheating power supply 108 and the welding power supply 110 may ultimately share a common power source (e.g., a common generator or line current connection), but the current from the common power source is converted, inverted, and/or regulated to yield the two separate currents - the preheating current and the welding current. For instance, the preheat operation may be facilitated with a single power source and associated converter circuitry, in which case three leads may extend from a single power source.

During operation, the system 100 establishes a welding circuit to conduct welding current from the welding power supply 110 to the first contact tip 18, and returns to the power supply 110 via the welding arc 112, the workpiece 106, and a work lead 118. To enable connection between the welding power supply 110 and the first contact tip 18 and the workpiece 44, the welding power supply 110 includes terminals 120, 122 (e.g., a positive terminal and a negative terminal).

During operation, the preheating power supply establishes a preheating circuit to conduct preheating current through a section 56 of the electrode wire 54. To enable connection between the preheating power supply 108 and the contact tips 18, 20, the preheating power supply 108 includes terminals 128, 130. The preheating current flows from the preheating power supply 108 to the second contact tip 20, the section 56 of the electrode wire 54, the first contact tip 18, and returns to the preheating power supply 108 via a cable 132 connecting the terminal 120 of the welding power supply 110 to the terminal 130 of the preheating power supply 108.

Because the preheating current path is superimposed with the welding current path over the connection between the first contact tip 18 and the power supplies 108, 110, the cable 132 may enable a more cost-effective single connection between the first contact tip 18 and the power supplies 108, 110 (e.g., a single cable) than providing separate connections for the welding current to the first contact tip 18 and for the preheating current to the first contact tip 18. In other examples, the terminal 130 of the preheating power supply 108 is connected to the first contact tip 18 via a separate path than the path between the first contact tip 18 and the welding power supply 110.

As illustrated in Figure 1B, the example system 100 includes a wire feeder 134 that feeds the electrode wire 54 to the torch 14 using a wire drive 136. The electrode wire 54 exits the wire feeder 134 and travels through a wire liner 138.

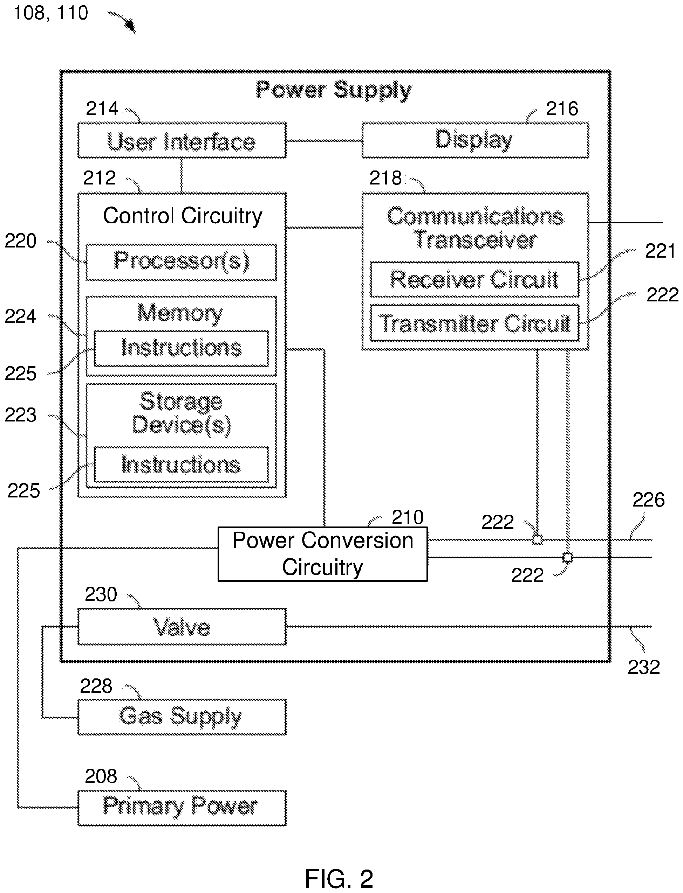

Figure 2 is a block diagram of an example implementation of the power supplies 108, 110 of Figure 1B. The example power supply 108, 110 powers, controls, and supplies consumables to a welding application. In some examples, the power supply 108, 110 directly supplies input power to the welding torch 108. In the illustrated example, the power supply 108, 110 is configured to supply power to welding operations and/or preheating operations. The example power supply 108, 110 also provides power to a wire feeder to supply the electrode wire 54 to the welding torch 108 for various welding applications (e.g., GMAW welding, flux core arc welding (FCAW), SAW).

The power supply 108, 110 receives primary power 208 (e.g., from the AC power grid, an engine/generator set, a battery, or other energy generating or storage devices, or a combination thereof), conditions the primary power, and provides an output power to one or more welding devices and/or preheating devices in accordance with demands of the system. The primary power 208 may be supplied from an offsite location (e.g., the primary power may originate from the power grid). The power supply 108, 110 includes a power conversion circuitry 210, which may include transformers, rectifiers, switches, and so forth, capable of converting the AC input power to AC and/or DC output power as dictated by the demands of the system (e.g., particular welding processes and regimes). The power conversion circuitry 210 converts input power (e.g., the primary power 208) to welding-type power based on a weld voltage setpoint and outputs the welding-type power via a weld circuit.

In some examples, the power conversion circuitry 210 is configured to convert the primary power 208 to both welding-type power and auxiliary power outputs. However, in other examples, the power conversion circuitry 210 is adapted to convert primary power only to a weld power output, and a separate auxiliary converter is provided to convert primary power to auxiliary power. In some other examples, the power supply 108, 110 receives a converted auxiliary power output directly from a wall outlet. Any suitable power conversion system or mechanism may be employed by the power supply 108, 110 to generate and supply both weld and auxiliary power.

The power supply 108, 110 includes a control circuitry 212 to control the operation of the power supply 108, 110. The power supply 108, 110 also includes a user interface 214. The control circuitry 212 receives input from the user interface 214, through which a user may choose a process and/or input desired parameters (e.g., voltages, currents, particular pulsed or non-pulsed welding regimes, and so forth). The user interface 214 may receive inputs using any input device, such as via a keypad, keyboard, buttons, touch screen, voice activation system, wireless device, etc. Furthermore, the control circuitry 212 controls operating parameters based on input by the user as well as based on other current operating parameters. Specifically, the user interface 214 may include a display 216 for presenting, showing, or indicating, information to an operator. The control circuitry 212 may also include interface circuitry for communicating data to other devices in the system, such as the wire feeder. For example, in some situations, the power supply 108, 110 wirelessly communicates with other welding devices within the welding system. Further, in some situations, the power supply 108, 110 communicates with other welding devices using a wired connection, such as by using a network interface controller (NIC) to communicate data via a network (e.g., ETHERNET, 10baseT, 10base100, etc.). In the example of FIG. 2, the control circuitry 212 communicates with the wire feeder via the weld circuit via a communications transceiver 218.

The control circuitry 212 includes at least one controller or processor 220 that controls the operations of the welding power supply 108, 110. The control circuitry 212 receives and processes multiple inputs associated with the performance and demands of the system. The processor 220 may include one or more microprocessors, such as one or more "general-purpose" microprocessors, one or more special-purpose microprocessors and/or ASICS, and/or any other type of processing device. For example, the processor 220 may include one or more digital signal processors (DSPs).

The example control circuitry 212 includes one or more storage device(s) 223 and one or more memory device(s) 224. The storage device(s) 223 (e.g., nonvolatile storage) may include ROM, flash memory, a hard drive, and/or any other suitable optical, magnetic, and/or solid-state storage medium, and/or a combination thereof. The storage device 223 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 224 may include a volatile memory, such as random access memory (RAM), and/or a nonvolatile memory, such as read-only memory (ROM). The memory device 224 and/or the storage device(s) 223 may store a variety of information and may be used for various purposes. For example, the memory device 224 and/or the storage device(s) 223 may store processor executable instructions 225 (e.g., firmware or software) for the processor 220 to execute. In addition, one or more control regimes for various welding processes, along with associated settings and parameters, may be stored in the storage device 223 and/or memory device 224, along with code configured to provide a specific output (e.g., initiate wire feed, enable gas flow, capture welding current data, detect short circuit parameters, determine amount of spatter) during operation.

In some examples, the welding power flows from the power conversion circuitry 210 through a weld cable 226. The example weld cable 226 is attachable and detachable from weld studs at each of the power supply 108, 110 (e.g., to enable ease of replacement of the weld cable 226 in case of wear or damage). Furthermore, in some examples, welding data is provided with the weld cable 226 such that welding power and weld data are provided and transmitted together over the weld cable 226. The communications transceiver 218 is communicatively coupled to the weld cable 226 to communicate (e.g., send/receive) data over the weld cable 226. The communications transceiver 218 may be implemented based on various types of power line communications methods and techniques. For example, the communications transceiver 218 may utilize IEEE standard P1901.2 to provide data communications over the weld cable 226. In this manner, the weld cable 226 may be utilized to provide welding power from the power supply 108, 110 to the wire feeder 134 and the welding torch 14. Additionally or alternatively, the weld cable 226 may be used to transmit and/or receive data communications to/from the wire feeder 134 and the welding torch 108. The communications transceiver 218 is communicatively coupled to the weld cable 226, for example, via cable data couplers 227, to characterize the weld cable 226, as described in more detail below. The cable data coupler 227 may be, for example, a voltage or current sensor.

In some examples, the power supply 108, 110 includes or is implemented in a wire feeder.

The example communications transceiver 218 includes a receiver circuit 221 and a transmitter circuit 222. Generally, the receiver circuit 221 receives data transmitted by the wire feeder via the weld cable 226 and the transmitter circuit 222 transmits data to the wire feeder via the weld cable 226. As described in more detail below, the communications transceiver 218 enables remote configuration of the power supply 108, 110 from the location of the wire feeder and/or compensation of weld voltages by the power supply 108, 110 using weld voltage feedback information transmitted by the wire feeder 134. In some examples, the receiver circuit 221 receives communication(s) via the weld circuit while weld current is flowing through the weld circuit (e.g., during a welding-type operation) and/or after the weld current has stopped flowing through the weld circuit (e.g., after a welding-type operation). Examples of such communications include weld voltage feedback information measured at a device that is remote from the power supply 108, 110 (e.g., the wire feeder) while the weld current is flowing through the weld circuit

Example implementations of the communications transceiver 218 are described in U.S. Patent No. 9,012,807. However, other implementations of the communications transceiver 218 may be used.

The example wire feeder 134 also includes a communications transceiver 219, which may be similar or identical in construction and/or function as the communications transceiver 218.

In some examples, a gas supply 228 provides shielding gases, such as argon, helium, carbon dioxide, and so forth, depending upon the welding application. The shielding gas flows to a valve 230, which controls the flow of gas, and if desired, may be selected to allow for modulating or regulating the amount of gas supplied to a welding application. The valve 230 may be opened, closed, or otherwise operated by the control circuitry 212 to enable, inhibit, or control gas flow (e.g., shielding gas) through the valve 230. Shielding gas exits the valve 230 and flows through a cable 232 (which in some implementations may be packaged with the welding power output) to the wire feeder which provides the shielding gas to the welding application. In some examples, the power supply 108, 110 does not include the gas supply 228, the valve 230, and/or the cable 232.

In either of the example systems of Figures 1A and/or 1B, the preheating power supply (e.g., the power conversion circuitry 30, the preheating power supply 108) may be configured to preheat the electrode wire 54 to a target temperature, without using a temperature sensor to measure the temperature of the preheated wire. For example, the preheating power supplies may use a temperature model (e.g., a predetermined relationship) to preheat the electrode wire 54 by identifying the material properties of the electrode wire 54, determining or receiving a target preheat temperature, and controlling the preheating output to result in preheating the electrode wire 54 to the target temperature using the temperature model.

The example temperature model may relate the final preheat temperature of the electrode wire 54 to the heating energy input (e.g., in Joules), relate a given electrode wire to a set of one or more material properties for controlling preheat process parameters, relate the material properties of a given electrode wire formulation to the target temperature, and/or relate the target temperature and welding conditions (e.g., wire feed speed) to corresponding preheat parameters. In some examples, the temperature model is selected or adapted based on the type of the electrode wire 54. For example, electrode wires may have different structures (e.g., solid wire, flux cored, metal cored, etc.), diameters (e.g., cross-sectional areas), and/or compositions (e.g., different solid metal alloys, sheath alloys, flux compositions, metal filler compositions, lubricant compositions, etc.), which affect the resistivity and/or specific heat capacity of the resulting electrode wire 54.

In some examples, the temperature model may be adapted using constants that control for the different material properties of different electrode wires. The constants can be derived based on, for example, the target wire temperature, process parameters, and/or material properties. Additionally or alternatively, constants and/or compensation factors may be determined empirically by measuring the wire temperature through contact methods and/or reliable non-contact methods.

During operation, the example control circuitry (e.g., the control circuitry 32, the control circuitry 212) determines material properties of the electrode wire 54 to be preheated via the wire preheating power (e.g., using the temperature model).

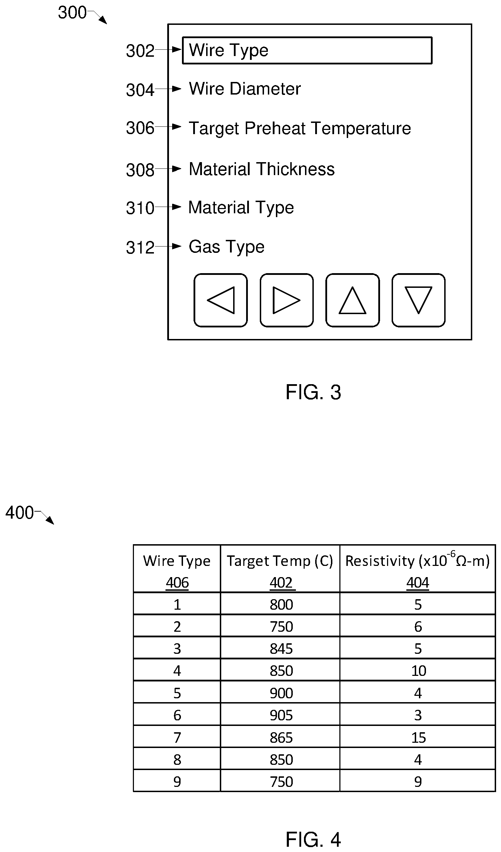

Figure 3 illustrates an example user interface 300 that may be used to input electrode wire properties for determining a target temperature. The example user interface 300 may implement the user interface 34 of Figure 1A and/or the user interface 214 of Figure 2. For example, the user interface 300 may be a touchscreen, a display and input devices (e.g., buttons, mouse and cursor, etc.), and/or any other type of input and/or output devices.

The example user interface 300 enables a user to select a wire type 302 (e.g., from a selection of multiple wire types), a wire diameter 304, a target preheat temperature 306, a material thickness 308 of the workpiece 44, a material type 310 of the workpiece 44, and/or a gas type 312. The example user interface 300 may further enable the operator to select or refine weld and/or preheat parameters, such as weld voltage, wire feed speed, weld current, preheat voltage, preheat current, and/or any other desired weld parameters and/or preheat parameters. To this end, the user interface 300 includes example buttons 314, 316, 318, 320 to navigate the user interface 300, to select properties and/or parameters, and/or to specify values for the properties and/or parameters. However, other input devices, such as a touchscreen, a knob, buttons, and/or other input devices may be used.

In some examples, a preheat target temperature may be input (e.g., the target preheat temperature 306 via the user interface 300, and/or via a communications device) and/or determined by the control circuitry 32, 212 based on an upper preheat temperature limit of the particular electrode wire. For example, different electrode wires may have different temperatures at which column strength is lost and/or melting occurs. Figure 4 is a table representative of an example database 400 storing target temperatures 402 and/or resistivities 404 associated with different wire types 406. In the example of Figure 4, the wire types are assigned index numbers, which may correspond to wire formulations, commercial electrode wires, and/or any other identification of electrode wire types. For each of the example wire types 406, the control circuitry 32, 212 may access a corresponding target temperature 402 and/or the resistivity 404. However, the database 400 may store other parameters, compensation factors, constants, and/or any other information about the stored electrode wires 406 to implement at least a portion of the temperature model.

The example control circuitry 32, 212 may retrieve or access the upper preheat temperature limit based on the determined or input electrode type, and determine the target preheat temperature based on a percentage reduction or constant offset reduction from the upper preheat temperature limit.

In some examples, a default preheat target temperature may be selected by the control circuitry 32, 212 based on the electrode type and/or material properties, and an operator may be permitted to adjust the preheat target temperature via the user interface 300. For example, reducing the preheat target temperature may cause an increase in the welding power output by the welding power conversion circuitry and increase the penetration of the weld. Conversely, increasing the preheat target temperature may cause a decrease in the welding power output and decrease the penetration of the weld.

The control circuitry 32, 212 determines one or more preheat process parameter(s) to heat the electrode wire 54 to the target preheat temperature based on the material properties and the temperature model (e.g., a predetermined relationship) between the target temperature, the material properties, and the preheat process parameter(s). Example preheat process parameters include a preheat voltage, preheat current, a wire resistance, a preheat power, a preheat enthalpy, a wire feed speed, and/or a preheat length.

The control circuitry 32, 212 may use the temperature model to relate the final preheat temperature to the initial temperature of the electrode wire 54, the material properties of the electrode wire 54 and/or a configuration of the preheating circuit, the diameter and/or cross-sectional area of the electrode wire 54, and the wire feed speed. The initial temperature of the electrode wire 54 may be determined using, for example, a temperature sensor 78 configured to measure an ambient temperature and/or a temperature of the electrode wire 54 at the spool 64. Additionally or alternatively, a temperature input via the user interface 34 (e.g., a user input of the ambient temperature via the user interface 300), retrieving ambient temperature information from a remote source via communications circuitry (e.g., a network source of temperature, a wireless ambient temperature sensor), and/or any other source.

Additionally or alternatively, when sequences of welds are performed, a portion of the electrode wire 54 may be preheated from a prior weld, in which case the temperature input may not be accurate. The example control circuitry 32, 212 may further model the temperature of the electrode wire 54 based on a time since the most recent weld to determine the initial temperature for a first portion of the subsequent weld, and adjust an initial wire temperature (and corresponding preheating current and/or preheating voltage parameters) during an initial preheating period for the subsequent weld.

The temperature model involves a second-order polynomial relating wire temperature to material properties and a plurality of preheat process parameters, such as wire feed speed, a preheat current, a preheat voltage, preheat power, preheat enthalpy, and/or preheat length. Equations 1 and 2 below illustrate another example relationship that may be used by the control circuitry 32, 212 to determine the preheat current for a given temperature.

$$temp = m \left( \frac{I^2}{A^2 * v} \right) + b \text{(Equation 1)}$$

$$I = \sqrt{\frac{(temp - b)(A^2 * v)}{m}} \quad \text{(Equation 2)}$$

In Equations 1 and 2, I is the preheat current, *temp* is the target preheat temperature, *b* is the initial temperature of the electrode wire, m is a constant based on the material properties (e.g., resistivity, specific heat capacity) of the electrode wire 54 and/or a configuration of the preheating circuit (e.g., preheat length), *A* is the cross-sectional area of the electrode wire 54, and v is a wire feed speed of the electrode wire 54.

In some examples, the control circuitry 32, 212 further determines additional preheat parameters from the determined preheat current *I*. For example, in a voltage-controlled preheat control loop, the control circuitry 32, 212 may determine a preheat voltage based on the preheat current, the actual or estimated resistance of the wire over the preheat length, and/or the preheat length.

During the weld operation, the control circuitry 32, 212 controls the power conversion circuitry (e.g., the power conversion circuitry 30, 210) to output the wire preheating power based on the preheat process parameter(s) to heat the electrode wire 54 to the target temperature. For example, the control circuitry 32, 212 may control the power conversion circuitry 30, 210 to output the determined preheat voltage and/or the determined preheat current to achieve the target preheat temperature of the wire. The control circuitry 32, 212 monitors the preheat voltage, the preheat current, preheat power, preheat enthalpy, the wire resistance, and/or the wire feed speed, and controls the preheat voltage and/or preheat current to preheat the electrode wire 54 to the target temperature.

If the wire feed speed or other weld variable changes, the example control circuitry 32 may recalculate the preheat current and/or the preheat voltage based on the temperature model.

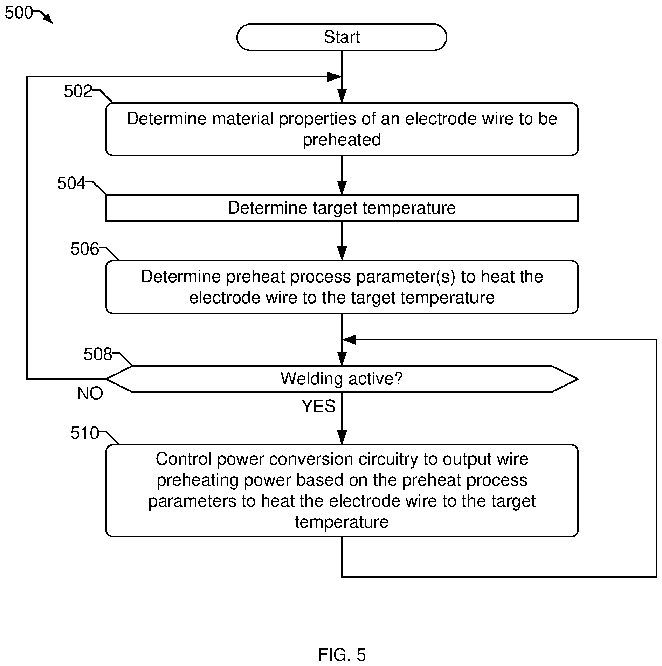

Figure 5 is a flowchart representative of example machine readable instructions 500 which may be executed by the example power supplies of Figures 1A, 1B, and/or 2 (e.g., via the control circuitry 32, 212) to output welding power and preheating power. The example instructions 500 are described below with reference to the control circuitry 32.

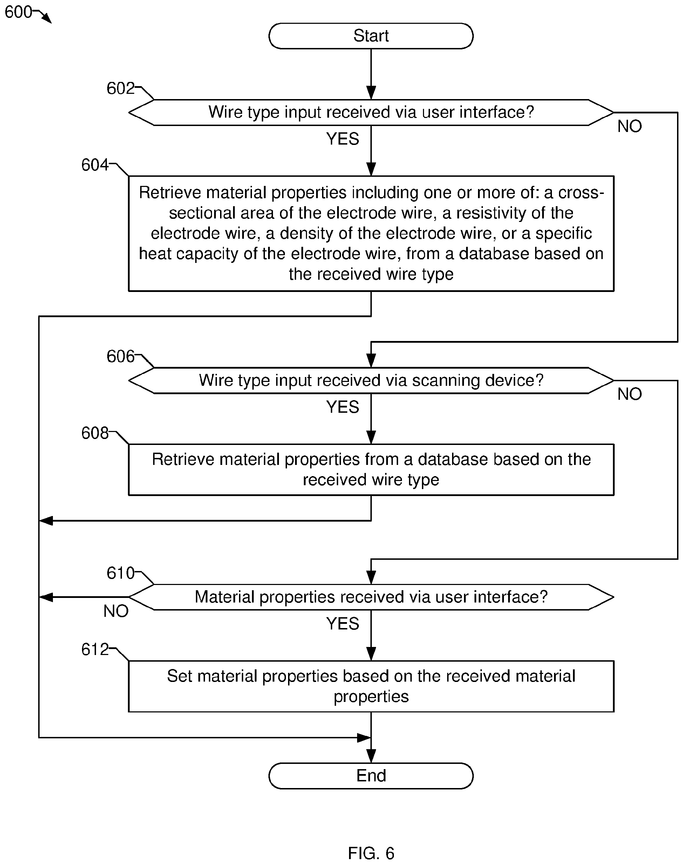

At block 502, the control circuitry 32 determines material properties of an electrode wire 54 to be preheated in a welding operation. For example, the control circuitry 32 may look up material properties based on identification of an electrode type and/or receive the material properties from the user interface 34. Example material properties include an initial temperature of the electrode wire 54, a cross-sectional area of the electrode wire 54, a resistivity of the electrode wire 54, a density of the electrode wire 54, and/or a specific heat capacity of the electrode wire 54. An example implementation of block 502 is described below with reference to Figure 6.

At block 504, the control circuitry 32 determines a target temperature for the preheated electrode wire 54. For example, the control circuitry 32 may determine the target temperature based on the material properties of the electrode wire 54 and/or the wire feed speed, and/or by looking up a target temperature for an electrode type in a database. In some examples, the target temperature may be input and/or adjusted via the user interface 34.

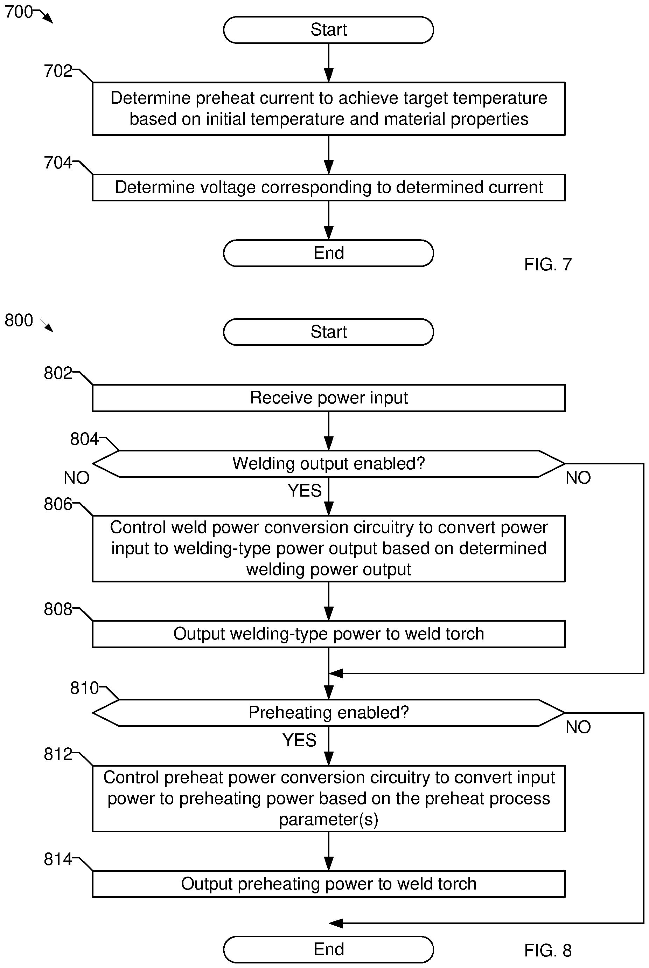

At block 506, the control circuitry 32 determines preheat process parameter(s) to heat the electrode wire 54 to the target temperature. For example, the control circuitry 32 may determine a preheat current, a preheat voltage, a preheat wire resistance, and/or any other process parameters. An example implementation of block 506 is described below with reference to Figure 7.

At block 508, the control circuitry 32 determines whether welding is active. If welding is active (block 508), at block 510, the control circuitry 32 controls power conversion circuitry (e.g., the power conversion circuitry 30) to output wire preheating power based on the preheat process parameters to heat the electrode wire 54 to the target temperature. An example implementation of block 510 is described below with reference to Figure 8.

If welding is not active (block 508), control returns to block 502 to determine whether the material properties of the electrode wire 54 have changed. In other examples, the control circuitry 32 may iterate block 508 until welding is active and/or until changes to the electrode wire 54 are made.

In some examples, block 506 may also be iterated during welding to monitor and control the preheat process parameters. For example, the control circuitry 32 may apply the temperature model to recalculate the preheat process parameter(s) in response to changes or variations in wire feed speed and/or initial wire temperature.

Figure 6 is a flowchart representative of example machine readable instructions 600 which may be executed by the example power supplies 12, 108 of Figures 1A, 1B, and/or 2 to determine material properties of an electrode wire to be preheated. The example instruction 600 may be executed by the control circuitry 32 of Figure 1A and/or the control circuitry 212 of Figure 2 to implement block 502 of Figure 5 to determine material properties of an electrode wire 54 to be preheated in a welding operation.

At block 602, the example control circuitry 32 determines whether a wire type input is received via a user interface (e.g., the wire type 302 of the user interface 300). If the wire type input has been received via the user interface (block 602), at block 604 the control circuitry 32 retrieves material properties including one or more of a cross-sectional area of the electrode wire 54, a resistivity of the electrode wire 54, a density of the electrode wire 54, or a specific heat capacity of the electrode wire 54, from a database (e.g., the database 400 of Figure 4) based on the received wire type.

If a wire type input is not received via the user interface (block 602), at block 606 the control circuitry 32 determines whether a wire type input has been received via a scanning device. For example, a spool or other package of electrode wire may have a barcode, QR code, RFID tag, and/or other device that may supply information associated with the electrode wire 54. The example user interface 34 may include a scanner, such as an RFID reader or barcode scanner, to access wire identification information and/or material properties from the wire package. If the user interface 34 receives wire identification information via the scanning device (block 606), at block 608 the control circuitry 32 accesses a database based on the received wire type (e.g., identification information) to retrieve material properties corresponding to the wire type.

If the wire type is not received via the scanning device (block 606), at block 610 the control circuitry 32 determines whether material properties have been received via a user interface (e.g., the user interface 34). For example, the user interface 300 may enable a user to directly enter material properties of the wire if the wire information is not stored in the database.

If material properties have been received via a user interface (block 610), at block 612 the control circuitry 32 sets the material properties based on the material property information received via the user interface 34.

After setting the material properties (block 612), if material properties have not been received via a user interface (block 610), after retrieving the material properties from the database (block 608, block 604), the example instructions 600 end and return control to block 504 of Figure 5.

Figure 7 is a flowchart representative of example machine readable instructions 700 which may be executed by the example power supplies 12, 108 of Figures 1A, 1B, and/or 2 to determine preheat process parameter(s) to heat the electrode wire to a target temperature. The example instructions 700 may be performed by the control circuitry 32 of Figure 1A and/or the control circuitry 212 of Figure 2 to implement block 506 of Figure 5.

At block 702, the control circuitry 32 determines a preheat current to achieve a target preheat temperature of the electrode wire 54 based on an initial temperature of the electrode wire 54 and material properties of the electrode wire 54. For example, the control circuitry 32 may use the example Equation 2 above to determine the preheat current based on the material properties determined in block 502 of Figure 5 (e.g., via the instructions 600 of Figure 6), a measured initial temperature of the electrode wire 54, and the determined target preheat temperature (e.g., determined in block 504).

The initial temperature may be determined using, for example, a temperature measurement of an ambient temperature (e.g., an environment around the wire feeder or wire package), a temperature measurement of the wire package (e.g., a spool 64 or other source of the electrode wire 54) via the temperature sensor 78, a temperature measurement of one or more elements of the torch 14 via the temperature sensor 78, a temperature measurement of a torch coolant via the temperature sensor 78, a temperature input via the user interface 34 (e.g., a user input of the ambient temperature via the user interface 300), retrieving ambient temperature information from a remote source via communications circuitry (e.g., a network source of temperature, a wireless ambient temperature sensor), and/or any other source.

Additionally or alternatively, when sequences of welds are performed, a portion of the electrode wire 54 may be preheated from a prior weld, in which case the temperature input may not be accurate. The example control circuitry 32 may further model the temperature of the electrode wire 54 based on a time since the most recent weld to determine the initial temperature for a first portion of the subsequent weld, and adjust an initial wire temperature (and corresponding preheating current and/or preheating voltage parameters) during an initial preheating period for the subsequent weld.

At block 704, the control circuitry 32 determines a voltage corresponding to the determined current. For example, in a voltage-controlled preheat control loop, the control circuitry 32 may control the power conversion circuitry 30 to output the preheat power based on a target voltage. Additionally or alternatively, the control circuitry 32 may monitor and/or control a resistance of the electrode wire 54 to a target resistance (which may correspond to a target temperature) by monitoring the voltage across the preheating section 56 and the current through the preheating section 56.

The example instructions 700 may then end and return control to block 508 of Figure 5.

Figure 8 is a flowchart representative of example machine readable instructions 800 which may be executed by the example power supplies 12, 108 of Figures 1A, 1B, and/or 2 to control the power conversion circuitry 30, 210 to output wire preheat power. The example instructions 800 may be performed by the control circuitry 32 of Figure 1A and/or the control circuitry 212 of Figure 2 to implement block 510 of Figure 5.

At block 802, the power conversion circuitry 30 receives the power input (e.g., the primary power 22 of Figure 1A). At block 804, the control circuitry 32 determines whether a welding output is enabled (e.g., based on welding process parameters). If the welding output is enabled (block 804), at block 806 the control circuitry 32 controls the power conversion circuitry 30 to convert the input power 22 to a welding power output based on a determined welding power output.

At block 808, the power conversion circuitry 30 outputs the welding output to the weld torch 14. For example, the welding output is conducted to the contact tip 18 and the work cable 42 for generation of the arc 26.

After outputting the welding-type power (block 808), or if the welding output is disabled (block 804), at block 810 the control circuitry 32 determines whether preheating is enabled (e.g., based on the preheating process parameters). For example, the control circuitry 32 may selectively enable the power conversion circuitry 30 to provide a preheating output (e.g., to the contact tips 18, 20) and selectively disable the power conversion circuitry 30 to stop the preheating output. The control circuitry 32 may enable and/or disable the preheating based on, for example, a user input via the user interface 34, and/or an input from the power source, a remote control, and/or the welding torch 14.

If the preheating output is enabled (block 810), at block 812 the power conversion circuitry 30 converts at least a portion of the input power to a preheating power output based on the determined preheating power output. For example, the control circuitry 32 may control the power conversion circuitry 30, 210 to convert the primary power 22 to the preheating output.

At block 814, the power conversion circuitry 30 outputs the welding-type power to the weld torch 14. For example, the preheating output is conducted to the contact tip 18 and the contact tip 20 via the conductors 70, 72.

After outputting the preheating power (block 814), or if the preheating is disabled (block 810), the example instructions 800 end and control returns to block 508 of Figure 5. The example instructions 800 may iterate via blocks 508, 510.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

An example control circuit implementation may be a microcontroller, a field programmable logic circuit and/or any other control or logic circuit capable of executing instructions that executes weld control software. The control circuit could also be implemented in analog circuits and/or a combination of digital and analog circuitry.

While the present invention has been described with reference to certain implementations, it will be understood by those skilled in the art that various changes may be made and equivalents may be substituted without departing from the scope of the present invention as defined in the appended claims.

**Claims**

1. A welding power supply (12; 108, 110), comprising:

   power conversion circuitry (30; 210) configured to convert input power to wire preheating power, and to output the wire preheating power to a preheating system (14); and
   control circuitry (32; 212) configured to control the power conversion circuitry;
   **characterised in that** the control circuitry (32; 212) is configured to control the power conversion circuitry (30; 210) based on the output of a temperature model to preheat an electrode wire (54) to a target temperature via the preheating system (14); and
   wherein the temperature model comprises a second-order polynomial relating wire temperature to a plurality of preheat process parameters, wherein the preheat process parameters comprise two or more of a wire feed speed, a preheat current, a preheat voltage, a preheat power, a preheat resistance, a preheat enthalpy, or a preheat length.

2. The welding power supply (12; 108, 110) as defined in claim 1, wherein the control circuitry (32; 212) is configured to control the power conversion circuitry (30; 210) by applying the temperature model based on one or more of: an initial temperature of the electrode wire (54), a cross-sectional area of the electrode wire, a resistivity of the electrode wire, a density of the electrode wire, or a specific heat capacity of the electrode wire.

3. The welding power supply (12; 108, 110) as defined in claim 2, wherein the control circuitry (32; 212) is configured to control the power conversion circuitry (30; 210) by applying the temperature model based on a wire feed speed of the electrode wire (54) or further comprising a user interface (34; 214) configured to receive an input specifying the one or more of the initial temperature of the electrode wire, the cross-sectional area of the electrode wire, the resistivity of the electrode wire, the density of the electrode wire, or the specific heat capacity of the electrode wire.

4. The welding power supply (12; 108, 110) as defined in claim 1, wherein the control circuitry (32; 212) is configured to determine one or more preheating parameters by accessing a storage device (38; 223, 224) storing preheating parameters corresponding to the temperature model.

5. The welding power supply (12; 108, 110) as defined in claim 1, wherein the temperature model is based on the following equation:

$$temp = m\left(\frac{I^2}{A^2 * v}\right) + b$$

wherein b is an initial temperature of the electrode wire (54), m is a constant based on one or more material properties of the electrode wire, I is a preheat current of the wire preheating power, A is a cross-sectional area of the electrode wire, v is a wire feed speed of the electrode wire, and temp is the target temperature.

6. A welding power supply (12; 108, 110) as defined in claim 1:
   wherein the control circuitry (30; 210) is configured to:

   determine material properties of the electrode wire (54) to be preheated via the wire preheating power, the material properties comprising one or more of: an initial temperature of the electrode wire, a cross-sectional area of the electrode wire, a resistivity of the electrode wire, a density of the electrode wire, or a specific heat capacity of the electrode wire;
determine a preheat process parameter to heat the electrode wire to a target temperature based on the material properties and the temperature model between the target temperature, the material properties, and the preheat process parameter; and
control the power conversion circuitry (32; 212) to output the wire preheating power based on the preheat process parameter to heat the electrode wire to the target temperature.

7. The welding power supply (12; 108, 110) as defined in claim 6, further comprising one or more input devices (34; 214; 300), the control circuitry configured to determine at least one of the material properties based on inputs received via the one or more input devices or further comprising one or more input devices, the control circuitry configured to determine the target temperature based on one or more inputs received via the one or more input devices.

8. The welding power supply (12; 108, 110) as defined in claim 7, wherein the inputs comprise an identification of a wire type.

9. The welding power supply (12; 108, 110) as defined in claim 8, wherein the control circuitry (30; 210) is configured to determine the material properties based on the identification of the wire type or wherein the control circuitry is configured to determine a wire diameter based on the inputs or to automatically determine the wire diameter.

10. The welding power supply (12; 108, 110) as defined in claim 6, wherein the control circuitry (30; 210) is configured to determine a preheat current I of the wire preheating power based on the following equation as the temperature model:

$$temp = m\left(\frac{I^2}{A^2 * v}\right) + b$$

wherein b is the initial temperature of the electrode wire (54), m is a constant based on at least one of the material properties of the electrode wire or a configuration of the preheating system (14), A is the cross-sectional area of the electrode wire, v is a wire feed speed of the electrode wire, and temp is the target temperature.

11. The welding power supply (12; 108, 110) as defined in claim 6, wherein the preheating system (14) comprises a first contact tip (18) of a welding torch and a second contact tip (20) of the welding torch.

12. The welding power supply (12; 108, 110) as defined in claim 6, wherein the control circuitry (30; 210) is configured to select the temperature model from a plurality of predetermined relationships.

13. The welding power supply (12; 108, 110) as defined in claim 1 or 6, wherein the control circuitry (30; 210) is configured to control the power conversion circuitry (32; 212) to heat the electrode wire (54) to the target temperature without use of a temperature sensor to measure a temperature of the preheated electrode wire.

14. The welding power supply (12; 108, 110) as defined in claim 6, wherein the control circuitry is configured to determine the target temperature to which the electrode wire is to be preheated.

## Patentansprüche

1. Schweißleistungsversorgung (12; 108, 110), aufweisend:

eine Leistungsumwandlungsschaltung (30; 210), die so ausgebildet ist, dass sie Eingangsleistung in Drahtvorheizleistung umwandelt und die Drahtvorheizleistung an ein Vorheizsystem (14) ausgibt; und
eine Steuerschaltung (32; 212), die so ausgebildet ist, dass sie die Leistungsumwandlungsschaltung steuert;
**dadurch gekennzeichnet, dass** die Steuerschaltung (32; 212) so ausgebildet ist, dass sie die Leistungsumwandlungsschaltung (30; 210) basierend auf der Ausgabe eines Temperaturmodells steuert, um einen Elektrodendraht (54) mithilfe des Vorheizsystems (14) auf eine Zieltemperatur vorzuheizen; und
wobei das Temperaturmodell ein Polynom zweiter Ordnung aufweist, das die Drahttemperatur mit einer Vielzahl von Vorheizprozessparametern in Beziehung setzt, wobei die Vorheizprozessparameter zwei oder mehr aus einer Drahtvorschubgeschwindigkeit, einem Vorheizstrom, einer Vorheizspannung, einer Vorheizleistung, einem Vorheizwiderstand, einer Vorheizenthalpie oder einer Vorheizlänge aufweisen.

2. Schweißleistungsversorgung (12; 108, 110) nach Anspruch 1, wobei die Steuerschaltung (32; 212) so ausgebildet ist, dass sie die Leistungsumwandlungsschaltung (30; 210) durch Anwenden des Temperaturmodells basierend auf einem oder mehreren von Folgendem steuert: einer Anfangstemperatur des Elektrodendrahts (54), einer Querschnittsfläche des Elektrodendrahts, einem spezifischen Widerstand des Elektrodendrahts, einer Dichte des Elektrodendrahts oder einer spezifischen Wärmekapazität des Elektrodendrahts.

3. Schweißleistungsversorgung (12; 108, 110), nach Anspruch 2, wobei die Steuerschaltung (32; 212) so ausgebildet ist, dass sie die Leistungsumwandlungsschaltung (30; 210) durch Anwenden des Temperaturmodells basierend auf einer Drahtvorschubgeschwindigkeit des Elektrodendrahts (54) steuert oder ferner eine Benutzerschnittstelle (34; 214) aufweist, die so ausgebildet ist, dass sie eine Eingabe empfängt, die das eine oder die mehreren aus der Anfangstemperatur des Elektrodendrahts, der Querschnittsfläche des Elektrodendrahts, dem spezifischen Widerstand des Elektrodendrahts, der Dichte des Elektrodendrahts, oder der spezifischen Wärmekapazität des Elektrodendrahts spezifiziert.

4. Schweißleistungsversorgung (12; 108, 110) nach Anspruch 1, wobei die Steuerschaltung (32; 212) so ausgebildet ist, dass sie einen oder mehrere Vorheizparameter durch Zugreifen auf eine Speichervorrichtung (38; 223, 224) bestimmt und die Vorheizparameter speichert, die dem Temperaturmodell entsprechen.

5. Schweißleistungsversorgung (12; 108, 110) nach Anspruch 1, wobei das Temperaturmodell auf der folgenden Gleichung basiert:

$$temp = m \left( \frac{I^2}{A^2 * v} \right) + b$$

wobei b eine Anfangstemperatur des Elektrodendrahts (54) ist, m eine Konstante ist, die auf einer oder mehreren Materialeigenschaften des Elektrodendrahts basiert, I ein Vorheizstrom der Drahtvorheizleistung ist, A eine Querschnittsfläche des Elektrodendrahts ist, v eine Drahtvorschubgeschwindigkeit des Elektrodendrahts ist und temp die Zieltemperatur ist.

6. Schweißleistungsversorgung (12; 108, 110) nach Anspruch 1:
wobei die Steuerschaltung (30; 210) zu Folgendem ausgebildet ist:

Bestimmen von Materialeigenschaften des durch die Drahtvorheizleistung vorzuheizenden Elektrodendrahts (54), wobei die Materialeigenschaften eines oder mehrere von Folgendem aufweisen: einer Anfangstemperatur des Elektrodendrahts, einer Querschnittsfläche des Elektrodendrahts, einem spezifischen Widerstand des Elektrodendrahts, einer Dichte des Elektrodendrahts oder einer spezifischen Wärmekapazität des Elektrodendrahts;

Bestimmen eines Vorheizprozessparameters, um den Elektrodendraht basierend auf den Materialeigenschaften und dem Temperaturmodell zwischen der Zieltemperatur, den Materialeigenschaften und dem Vorheizprozessparameter auf eine Zieltemperatur zu erwärmen; und Steuern der Leistungsumwandlungsschaltung (32; 212), um die Drahtvorheizleistung basierend auf dem Vorheizprozessparameter auszugeben, um den Elektrodendraht auf die Zieltemperatur zu erwärmen.

7. Schweißleistungsversorgung (12; 108, 110) nach Anspruch 6, die ferner eine oder mehrere Eingabevorrichtungen (34; 214; 300) aufweist, wobei die Steuerschaltung so ausgebildet ist, dass sie mindestens eine der Materialeigenschaften basierend auf Eingaben bestimmt, die über die eine oder die mehreren Eingabevorrichtungen empfangen werden, oder die ferner eine oder mehrere Eingabevorrichtungen aufweist, wobei die Steuerschaltung so ausgebildet ist, dass sie die Zieltemperatur basierend auf einer oder mehreren Eingaben bestimmt, die über die eine oder die mehreren Eingabevorrichtungen empfangen werden.

8. Schweißleistungsversorgung (12; 108, 110) nach Anspruch 7, wobei die Eingaben eine Identifikation eines Drahttyps aufweisen.

9. Schweißleistungsversorgung (12; 108, 110) nach Anspruch 8, wobei die Steuerschaltung (30; 210) so ausgebildet ist, dass sie die Materialeigenschaften basierend auf der Identifikation des Drahttyps bestimmt, oder wobei die Steuerschaltung so ausgebildet ist, dass sie einen Drahtdurchmesser basierend auf den Eingaben bestimmt oder automatisch den Drahtdurchmesser bestimmt.

10. Schweißleistungsversorgung (12; 108, 110) nach Anspruch 6, wobei die Steuerschaltung (30; 210) so ausgebildet ist, dass sie einen Vorheizstrom I der Drahtvorheizleistung basierend auf der folgenden Gleichung als das Temperaturmodell bestimmt:

$$temp = m \left( \frac{I^2}{A^2 * v} \right) + b$$

wobei b die Anfangstemperatur des Elektrodendrahts (54) ist, m eine Konstante ist, basierend auf mindestens einer der Materialeigenschaften des Elektrodendrahts oder einer Konfiguration des Vorheizsystems (14), A die Querschnittsfläche des Elektrodendrahts ist, v eine Drahtvorschubgeschwindigkeit des Elektrodendrahts ist und temp die Zieltemperatur ist.

**11.** Schweißleistungsversorgung (12; 108, 110) nach Anspruch 6, wobei das Vorheizsystem (14) eine erste Kontaktspitze (18) eines Schweißbrenners und eine zweite Kontaktspitze (20) des Schweißbrenners aufweist.

**12.** Schweißleistungsversorgung (12; 108, 110) nach Anspruch 6, wobei die Steuerschaltung (30; 210) so ausgebildet ist, dass sie das Temperaturmodell aus einer Vielzahl von vorbestimmten Beziehungen auswählt.

**13.** Schweißleistungsversorgung (12; 108, 110) nach Anspruch 1 oder 6, wobei die Steuerschaltung (30; 210) so ausgebildet ist, dass sie die Leistungsumwandlungsschaltung (32; 212) so steuert, dass sie den Elektrodendraht (54) auf die Zieltemperatur erwärmt, ohne einen Temperatursensor zu verwenden, um eine Temperatur des vorgeheizten Elektrodendrahts zu messen.

**14.** Schweißleistungsversorgung (12; 108, 110) nach Anspruch 6, wobei die Steuerschaltung so ausgebildet ist, dass sie die Zieltemperatur bestimmt, auf die der Elektrodendraht vorgeheizt werden soll.

**Revendications**

**1.** Alimentation en puissance de soudage (12 ; 108, 110), comprenant :

une circuiterie de conversion de puissance (30 ; 210) configurée pour convertir de la puissance d'entrée en puissance de préchauffage de fil, et pour fournir en sortie la puissance de préchauffage de fil à un système de préchauffage (14) ; et une circuiterie de commande (32 ; 212) configurée pour commander la circuiterie de conversion de puissance ;
**caractérisée en ce que** la circuiterie de commande (32 ; 212) est configurée pour commander la circuiterie de conversion de puissance (30 ; 210) sur la base de la sortie d'un modèle de température pour préchauffer un fil d'électrode (54) jusqu'à une température cible par l'intermédiaire du système de préchauffage (14) ; et
dans laquelle le modèle de température comprend un polynôme de second degré mettant en relation la température de fil avec une une pluralité de paramètres de processus de préchauffage, dans laquelle les paramètres de processus de préchauffage comprennent au moins deux parmi une vitesse d'apport de fil, un courant de préchauffage, une tension de préchauffage, une puissance de préchauffage, une résistance de préchauffage, une enthalpie de préchauffage ou une longueur de préchauffage.

**2.** Alimentation en puissance de soudage (12 ; 108, 110) selon la revendication 1, dans laquelle la circuiterie de commande (32 ; 212) est configurée pour commander la circuiterie de conversion de puissance (30 ; 210) par application du modèle de température sur la base d'une ou de plusieurs parmi : une température initiale du fil d'électrode (54), une aire en coupe transversale du fil d'électrode, une résistivité du fil d'électrode, une densité du fil d'électrode, ou une chaleur spécifique du fil d'électrode.

**3.** Alimentation en puissance de soudage (12 ; 108, 110) selon la revendication 2, dans lequel la circuiterie de commande (32 ; 212) est configurée pour commander la circuiterie de conversion de puissance (30 ; 210) par application du modèle de température sur la base d'une vitesse d'apport de fil du fil d'électrode (54) ou comprenant en outre une interface utilisateur (34 ; 214) configurée pour recevoir une entrée spécifiant les une ou plusieurs parmi la température initiale du fil d'électrode, l'aire en coupe transversale du fil d'électrode, la résistivité du fil d'électrode, la densité du fil d'électrode ou la chaleur spécifique du fil d'électrode.

**4.** Alimentation en puissance de soudage (12 ; 108, 110) selon la revendication 1, dans laquelle la circuiterie de commande (32 ; 212) est configurée pour déterminer un ou plusieurs paramètres de préchauffage par accès à un dispositif de stockage (38 ; 223, 224) stockant des paramètres de préchauffage correspondant au modèle de température.

**5.** Alimentation en puissance de soudage (12 ; 108, 110) selon la revendication 1, dans laquelle le modèle de température est basé sur l'équation suivante :

$$temp = m\left(\frac{I^2}{A^2 * v}\right) + b$$

où b est une température initiale du fil d'électrode (54), m est une constante basée sur une ou plusieurs propriétés de matériau du fil d'électrode, I est un courant de préchauffage de la puissance de préchauffage de fil, A est une aire en coupe transversale du fil d'électrode, v est une vitesse d'apport de fil du fil d'électrode, et temp est la température cible.

**6.** Alimentation en puissance de soudage (12 ; 108, 110) selon la revendication 1 :
dans laquelle la circuiterie de commande (30 ; 210) est configurée pour :

déterminer des propriétés de matériau du fil d'électrode (54) à préchauffer par l'intermédiaire de la puissance de préchauffage de fil, les propriétés de matériau comprenant une ou plusieurs parmi : une température initiale du fil d'électrode, une aire de coupe transversale du fil d'électrode, une résistivité du fil d'électrode, une densité du fil d'électrode ou une chaleur spécifique du fil d'électrode ;

déterminer un paramètre de processus de préchauffage pour chauffer le fil d'électrode jusqu'à une température cible sur la base des propriétés de matériau et du modèle de température entre la température cible, les propriétés de matériau et le paramètre de processus de préchauffage ; et

commander la circuiterie de conversion de puissance (32 ; 212) pour fournir en sortie la puissance de préchauffage de fil sur la base du paramètre de processus de préchauffage pour chauffer le fil d'électrode jusqu'à la température cible.

7. Alimentation en puissance de soudage (12 ; 108, 110) selon la revendication 6, comprenant en outre un ou plusieurs dispositifs d'entrée (34 ; 214 ; 300), la circuiterie de commande étant configurée pour déterminer au moins l'une des propriétés de matériau sur la base d'entrées reçues par l'intermédiaire des un ou plusieurs dispositifs d'entrée ou comprenant en outre un ou plusieurs dispositifs d'entrée, la circuiterie de commande étant configurée pour déterminer la température cible sur la base d'une ou de plusieurs entrées reçues par l'intermédiaire des un ou plusieurs dispositifs d'entrée.

8. Alimentation en puissance de soudage (12 ; 108, 110) selon la revendication 7, dans laquelle les entrées comprennent une identification d'un type de fil.

9. Alimentation en puissance de soudage (12 ; 108, 110) selon la revendication 8, dans laquelle la circuiterie de commande (30 ; 210) est configurée pour déterminer les propriétés de matériau sur la base de l'identification du type de fil ou dans laquelle la circuiterie de commande est configurée pour déterminer un diamètre de fil sur la base des entrées ou pour déterminer automatiquement le diamètre de fil.

10. Alimentation en puissance de soudage (12 ; 108, 110) selon la revendication 6, dans laquelle la circuiterie de commande (30 ; 210) est configurée pour déterminer un courant de préchauffage I de la puissance de préchauffage de fil sur la base de l'équation suivante en tant que modèle de température :

$$temp = m\left(\frac{I^2}{A^2 * v}\right) + b$$

où b est la température initiale du fil d'électrode (54), m est une constante basée sur au moins l'une des propriétés de matériau du fil d'électrode ou une configuration du système de préchauffage (14), A est l'aire en coupe transversale du fil d'électrode, v est une vitesse d'apport de fil du fil d'électrode, et temp est la température cible.

11. Alimentation en puissance de soudage (12 ; 108, 110) selon la revendication 6, dans laquelle le système de préchauffage (14) comprend une première pointe de contact (18) d'un chalumeau de soudage et une deuxième pointe de contact (20) du chalumeau de soudage.

12. Alimentation en puissance de soudage (12 ; 108, 110) selon la revendication 6, dans laquelle la circuiterie de commande (30 ; 210) est configurée pour sélectionner le modèle de température parmi une pluralité de relations prédéterminées.

13. Alimentation en puissance de soudage (12 ; 108, 110) selon la revendication 1 ou 6, dans laquelle la circuiterie de commande (30 ; 210) est configurée pour commander la circuiterie de conversion de puissance (32 ; 212) pour chauffer le fil d'électrode (54) jusqu'à la température cible sans utiliser de capteur de température pour mesurer une température du fil d'électrode préchauffé.

14. Alimentation en puissance de soudage (12 ; 108, 110) selon la revendication 6, dans laquelle la circuiterie de commande est configurée pour déterminer la température cible jusqu'à laquelle le fil d'électrode doit être préchauffé.

FIG. 1A

EP 4 021 674 B1

FIG. 1B

108, 110

**Power Supply**

214 — **User Interface**

216 — **Display**

212 — **Control Circuitry**

218 — **Communications Transceiver**

220 — **Processor(s)**

221 — **Receiver Circuit**

222 — **Transmitter Circuit**

224 — **Memory**

225 — **Instructions**

223 — **Storage Device(s)**

225 — **Instructions**

210 — **Power Conversion Circuitry**

222

222

226

230 — **Valve**

232

228 — **Gas Supply**

208 — **Primary Power**

FIG. 2

300

302 ▶ | Wire Type |
304 ▶ Wire Diameter
306 ▶ Target Preheat Temperature
308 ▶ Material Thickness
310 ▶ Material Type
312 ▶ Gas Type

◁ ▷ △ ▽

FIG. 3

400

| Wire Type 406 | Target Temp (C) 402 | Resistivity (x10$^{-6}$Ω-m) 404 |
|---|---|---|
| 1 | 800 | 5 |
| 2 | 750 | 6 |
| 3 | 845 | 5 |
| 4 | 850 | 10 |
| 5 | 900 | 4 |
| 6 | 905 | 3 |
| 7 | 865 | 15 |
| 8 | 850 | 4 |
| 9 | 750 | 9 |

FIG. 4

500

Start

502 — Determine material properties of an electrode wire to be preheated

504 — Determine target temperature

506 — Determine preheat process parameter(s) to heat the electrode wire to the target temperature

508 — Welding active?

NO

YES

510 — Control power conversion circuitry to output wire preheating power based on the preheat process parameters to heat the electrode wire to the target temperature

FIG. 5

600

Start

602 — Wire type input received via user interface? — NO

YES

604 — Retrieve material properties including one or more of: a cross-sectional area of the electrode wire, a resistivity of the electrode wire, a density of the electrode wire, or a specific heat capacity of the electrode wire, from a database based on the received wire type

606 — Wire type input received via scanning device? — NO

YES

608 — Retrieve material properties from a database based on the received wire type

610 — NO — Material properties received via user interface?

YES

612 — Set material properties based on the received material properties

End

FIG. 6

700

```
┌─────────────────────────┐
│          Start          │
└─────────────────────────┘
             │
             ▼
```

702
```
┌─────────────────────────────────────────────────────────────┐
│ Determine preheat current to achieve target temperature      │
│ based on initial temperature and material properties         │
└─────────────────────────────────────────────────────────────┘
```

704
```
┌─────────────────────────────────────────────────────────────┐
│ Determine voltage corresponding to determined current        │
└─────────────────────────────────────────────────────────────┘
             │
             ▼
┌─────────────────────────┐
│          End            │
└─────────────────────────┘
```

FIG. 7

800

```
┌─────────────────────────┐
│          Start          │
└─────────────────────────┘
             │
             ▼
```

802
```
┌─────────────────────────────────────────────────────────────┐
│                    Receive power input                       │
└─────────────────────────────────────────────────────────────┘
```

804
```
        Welding output enabled?
NO                                          NO
           YES │
```

806
```
┌─────────────────────────────────────────────────────────────┐
│ Control weld power conversion circuitry to convert power     │
│ input to welding-type power output based on determined       │
│ welding power output                                         │
└─────────────────────────────────────────────────────────────┘
```

808
```
┌─────────────────────────────────────────────────────────────┐
│          Output welding-type power to weld torch             │
└─────────────────────────────────────────────────────────────┘
```

810
```
        Preheating enabled?
                                            NO
           YES │
```

812
```
┌─────────────────────────────────────────────────────────────┐
│ Control preheat power conversion circuitry to convert input  │
│ power to preheating power based on the preheat process       │
│ parameter(s)                                                 │
└─────────────────────────────────────────────────────────────┘
```

814
```
┌─────────────────────────────────────────────────────────────┐
│          Output preheating power to weld torch               │
└─────────────────────────────────────────────────────────────┘
             │
             ▼
┌─────────────────────────┐
│          End            │
└─────────────────────────┘
```

FIG. 8

**EP 4 021 674 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0316936 A2
- US 9012807 B